# EUROPÄISCHE PATENTSCHRIFT

(11) **EP 2 764 275 B1**
(45) Veröffentlichungstag und Bekanntmachung des Hinweises auf die Patenterteilung: **22.11.2017**
(21) Anmeldenummer: 12777856.1
(22) Anmeldetag: 04.10.2012
(51) Int. Cl.: F16G 1/10, F16G 1/12, F16G 1/28, F16G 5/08, F16G 5/10, F16G 5/20, B65G 15/00, D02G 3/18

(54) **RIEMEN MIT EINGEBETTETEN ZUGTRÄGERN**
BELT HAVING EMBEDDED TENSION MEMBERS
COURROIE À SUPPORTS DE TRACTION INCORPORÉS

(30) Priorität: 06.10.2011 DE 102011114919
(43) Veröffentlichungstag der Anmeldung: 13.08.2014
(73) Patentinhaber: Arntz Beteiligungs GmbH & Co. KG, 37671 Höxter (DE)
(72) Erfinder: GIBSON, Daniel Pattie, 37671 Höxter (DE)
(74) Vertreter: Lins, Edgar
(86) Internationale Anmeldenummer: PCT/EP2012/004144
(87) Internationale Veröffentlichungsnummer: WO 2013/050143

(56) Entgegenhaltungen:
- EP-A2- 1 429 046
- WO-A1-2011/068729
- GB-A- 2 226 056
- US-A- 3 349 634
- US-A- 3 862 882
- US-A1- 2009 142 572

## Beschreibung

Die Erfindung betrifft Kraftübertragungs- oder Förderriemen mit einem Riemengrundkörper oder einer Cordeinbettungszone aus einem synthetischen Elastomer und wenigstens einem in das Elastomer eingebetteten Zugträger. Das Elastomer ist ein Polyurethan, wie in diesem Zusammenhang für Riemen bekannt. Die Zugträger bestehen aus einem Cord, der aus mehreren einzelnen Strängen aufgebaut ist, wobei die zum Cord vereinigten Einzelstränge ein Material einschließen, das vom Elastomer des Riemenkörpers oder der Einbettungszone abweicht.

In der Riementechnik ist es bekannt, Zugträger zur Aufnahme von Zugkräften und zur Verstärkung in ein umgebendes Riemenmaterial einzubetten. Das Riemenmaterial des Riemengrundkörpers besteht häufig aus Gummi, Synthesekautschuk oder anderen Polymeren. Als Zugträger dienen häufig Seile aus Kunstfasern oder Stahl, in diesem Zusammenhang auch als Cord bezeichnet. Ein Seil bzw. Cord kann auf verschiedene Weise ausgebildet sein und dabei ein oder mehrmals gruppenweise zusammengedreht (geschlagen) oder geflochten sein. Unabhängig vom Seilaufbau haben Corde gemeinsam, dass sich innerhalb des Cordvolumens Zwischenräume befinden. Die Art und Weise wie diese Zwischenräume ausgefüllt sind, hat großen Einfluss auf die Eigenschaften des Zugträgers.

Aus der US 3,138,962 B ist ein Kraftübertragungsriemen bekannt, bei dem die Cordzwischenräume beim Formgießen des Riemenkörpers von einem flüssig gießbaren Polyurethan, in das der Cord eingebettet wird, völlig ausgefüllt werden. Dies führt zwar anfangs zu einer guten Cordeinbindung, jedoch unter Last zu deutlicher Verringerung der Riemenlebensdauer. Das Riemenurethan hat im Allgemeinen einen hohen Reibungskoeffizienten, so dass ein solches Polyurethan als Füllmaterial für den Cord zu einem Verlust an Elastizität, geringer Biegefähigkeit und Brechen des Cordstrangs aufgrund der Versteifung führt. Dieser Effekt ist für Carbonfasern und Aramidfasern besonders stark, da diese fein sind und unter Belastung leicht zerbrochen werden, wenn sie nicht im gewissen Maße aufeinander gleiten können.

Aus der EP 0 841 500 B1 ist ein Zahnriemen aus einem elastischen Polyurethanmaterial bekannt, der mit Zugsträngen aus Carbonfasercord versehen ist, wobei das Polyurethanmaterial des Riemengrundkörpers nur einen Teil der Cordzwischenräume durchdringt, mindestens mit ungefähr 0,2 mg Riemenmaterial pro mm³ Cordvolumen. Der Carboncord kann herstellerseitig bereits mit einer Schlichte versehen sein, beispielsweise aus einem Epoxid, was das Brechen der Fasern verhindern soll, den Cord jedoch nicht vollständig versiegelt, sondern zwickelförmige Zwischenräume freilässt. Nachteilig ist, dass der Cord rein mechanisch in das umgebende Riemenpolyurethan eingebunden wird, welches in seinem hohen Reibungskoeffizienten unverändert ist und keinen Kontakt zu einem anderen, bindenden Material besitzt.

Aus der WO 2011/068729 A1 ist demgegenüber bekannt, einen Zugträger, der in den elastischen Körper eines Riemens eingebettet ist und der beispielsweise ein Carboncord sein kann, zu 20 bis 99 % des Zwischenraumvolumens mit einer harnstoffvernetzten Polyurethanimprägnierung zu versehen und den so vorbehandelten Cord sodann in einen elastomeren Riemenkörper einzubetten. Das um den Cord gegossene Polyurethan kann dabei in die verbleibenden Zwischenräume einfließen. Das Füllmaterial aus harnstoffvernetztem Polyurethan wird durch Vernetzen eines Polyurethanprepolymers mit Diaminen oder Wasser hergestellt. Das spezielle Füllmaterial soll die Cordfasern vor Brechen schützen und dem Cord insgesamt eine wesentlich bessere Elastizität und gute Biegeeigenschaften verleihen. Nachteilig ist, dass das Füllmaterial für die Cordzwischenräume vor der Einbettung gesondert gehärtet wird und sich somit nicht perfekt mit dem umgebenden Riemenelastomer verbindet.

Die GB 2 226 056 A offenbart ein Kabel aus geschlagenen oder gewundenen Cordsträngen, die mit einem Harz beschichtet und außen mit einer Textilabdeckung versehen sind. Das Harz, mit dem die Kabelstränge beschichtet sind, ist in sich härtbar oder thermoplas-tisch. Das Kabel selbst ist nicht eingebettet.

Die US 3,349,634 beschreibt einen Kraftübertragungsriemen mit einem Körper aus einem Urethan-Elastomer und darin eingebetteten Zugträgern aus einem Cord, wobei die Cordstränge mit einem adhäsiven bzw. klebenden Tauchmaterial beschichtet sind. Das Material für die Cordschlichte (Dip-Material) ist ein Klebstoff in Lösung.

Die US 2009/0142572 A1 offenbart eine Cordeinbettung aus einem NCO-terminierten Dien-Oligomer. Diese Schlichte enthält keine Hydroxyaromaten, die polyurethan-basierte Schlichte ist zur Anbindung der Verstärkungsträger in einem Gummiprodukt vorgesehen.

Die US 3,862,882 bezieht sich auf glasfaserverstärkte Elastomere und insbesondere die Behandlung von Glasfasercord zur Einbindung solcher Zugträger in ein Elastomer. Das Elastomer des zu verstärkenden Grundkörpers ist ein Gummielastomer bzw. Synthesekautschuk. Die Glasfasereinbindung ist wegen der glatten Glasoberfläche und auch der hydrophilen Eigenschaften des Glases schwierig. Für eine bessere Einbindung wird die Imprägnierung der Glasfasern zweischichtig vorgenommen. Die Gasfasern werden mit einem Primer aus einer Amin-Amid-Zusammensetzung versehen, die dann zu einem Glasfaserbündel oder -cord zusammengeführt und anschließend mit einer äußeren Imprägnierung aus einem Resorcin-Formaldehyd-Harz versehen werden. Das äußere Resorcin-Formaldehyd-Harz bewirkt sodann die Einbindung in den Gummi-Elastomerkörper.

Aus der EP 1 429 046 A2 ist ein Kraftübertragungsriemen bekannt, bei dem Faserstränge als Zugträger in einen elastomeren Riemenkörper eingebettet sind. Die Faserstränge sind mit einer Mischung aus einem Polyamid und einem Epoxy-Harz behandelt und gegebenenfalls zusätzlich in einem zweiten Schritt mit einem RFL-Adhäsivmittel. Eingebettet sind die Zugstränge in ein Gummielastomer, vorzugsweise ein Ethylen-Alpha-Olefin. Die Fasern können aus synthetischen Fasern, Baumwolle, Stahl oder Carbonfasern bestehen.

Die Aufgabe der Erfindung besteht darin, die Einbindung von Cord als Zugträger in übliche synthetische Riemenelastomere, insbesondere Polyurethane und speziell Polyurethanzahnriemenmaterialien zu verbessern und so die Lebensdauer des Riemens zu erhöhen. Die Aufgabe umfasst weiterhin und spezieller die Einbindung von Carboncord in synthetische Elastomere, insbesondere Riemenpolyurethane und speziell Zahnriemenpolyurethane.

Die Aufgabe wird durch einen Kraftübertragungs- oder Förderriemen gemäß den Merkmalen des Anspruchs 1 und einen Zugträger gemäß den Merkmalen des Anspruchs 12 gelöst.

Der Kraftübertragungs- oder Förderriemen gemäß dieser Erfindung besitzt einen Riemengrundkörper oder eine Cordeinbettungszone aus einem synthetischen Elastomer, nämlich einem Polyurethan, und wenigstens einen in das Polyurethan eingebetteten Zugträger aus einem Cord, dessen Stränge ein Material einschließen, das vom Elastomer des Riemenkörpers oder der Einbettungszone abweicht. Das Material muss nicht vollständig von Cordsträngen eingeschlossen sein, sondern es befindet sich generell zwischen den Cordsträngen innerhalb des im Wesentlichen zylindrischen Cordvolumens. Das in dem Cord befindliche Material stellt ein Füllmaterial für die Cordzwischenräume dar und füllt diese ganz oder teilweise aus. Das in dem Cord zusätzlich vorhandene Material besteht aus:
- einem nachhärtbaren, nicht kautschukhaltigen Hydroxy-aromat-Aldehyd-Harz und oder
- Reaktionsprodukten von Hydroxyaromaten oder Reaktionsprodukten von Hydroxyaromaten mit Aldehyden mit Isocyanaten oder Isocyanatprepolymeren.

Als Hydroxyaromat im Sinne dieser Erfindung wird vorzugsweise Resorcin verwendet. Allgemein können jedoch im Rahmen dieser Erfindung ein oder mehrere Hydroxyaromaten aus der folgenden Gruppe ausgewählt werden: Resorcin, Phenol, Hydrochinon, Kresol, Bisphenol A und andere Bishydroxyphenylalkane oder Hydroxyphenylalkane einschließlich der zur Vernetzung und Kondensation sowie zur Reaktion mit Isocyanaten geeignete Derivate dieser Stoffe.

Die Hydroxyaromaten, Dihydroxyaromaten und die Phenole werden in besonders bevorzugter Ausführungsform als Kondensate in dem Füllmaterial verwendet. Geeignete Kondensate sind insbesondere solche, die durch Kondensationsreaktionen mit Aldehyden entstehen, vorzugsweise mit Formaldehyd. Besonders bevorzugt im Sinne der Erfindung sind solche Kondensationsprodukte mit einem Aromatenüberschuss, die noch thermoplastisch sind und als Di- oder Polyhydroxyverbindungen mit Isocyanaten bzw. in reaktiven PU-Massen reagieren können. Diese Verbindungen sind vorzugsweise kettenförmig, unvernetzt und flüssig bis viskos. Allgemein sind alle Hydroxyaromat-Aldehyd-Harze für die Erfindung gut geeignet.

Besonders bevorzugt sind im Rahmen der Erfindung Resorcin-Formaldehyd-Verbindungen, Phenolformaldehyd-Verbindungen und Phenol-Resorcin-Formaldehyd-Verbindungen, beispielsweise in Form von Oligo-Kondensaten und Novolaken. Des Weiteren sind vernetzte, vorzugsweise noch plastische Hydroxyaromat-Aldehyd-Harze, insbesondere Resorcin-Formaldehyd-Harze, Phenolformaldehyd-Harze und Phenol-Resorcin-Formaldehyd-Harze geeignet. Diese Harze sind vorzugsweise zäh (hochviskos) und weich, so dass sie den Cordfasern nicht die Beweglichkeit und Elastizität nehmen. Die Harze sind nachhärtbar und binden in Kontakt mit dem Riemenelastomer gut ab, in besonderem Maße, wenn dies ein Polyurethan ist über darin während des Formgießens noch enthaltene reaktive Gruppen.

Des Weiteren sind als Füllmaterialien Reaktionsprodukte von Hydroxyaromaten oder Hydroxyaromat-Aldehyd-Verbindungen mit Isocyanaten oder Isocyanat-Prepolymeren geeignet. Hierunter sind wiederum solche Produkte mit Resorcin besonders bevorzugt, insbesondere Resorcin-Formaldehyd-Verbindungen und Harze, weiterhin bevorzugt sind Phenolformaldehyd-Verbindungen und Resorcin-Phenol-Formaldehyd-Verbindungen jeweils in Kombination mit Isocyanaten oder Isocyanat-Prepolymeren.

Als Füllmaterialien kämen grundsätzlich auch bekannte RFL-Materialien in Frage, z.B. die erfindungsgemäßen Füllmaterialien in Verbindung mit Kautschuk oder Kautschuklatex. Es hat sich jedoch herausgestellt, dass solche Füllmaterialien mit synthetischen Elastomeren, insbesondere den üblichen Riemenpolyurethanen, nicht gut kompatibel sind.

Die Vorteile der erfindungsgemäßen Riemen sind vielfältig. Zunächst kann das Füllmaterial gerade bei niedrigen Kondensationsgraden der Hydroxyaromaten so eingestellt werden, dass das Füllmaterial weich und elastisch bleibt und so die Biegefähigkeit des Cords optimal erhalten bleibt. Das Füllmaterial eignet sich dabei gleichzeitig als Schlichte für empfindliche Cordfasern wie z.B. Carbonfasern und Aramidfasern.

Je nach Riemenanwendungszweck und Riementyp kann das Füllmaterial auch härter eingestellt werden, solange es die oben genannten Zwecke erfüllt. Hierfür können Kondensationsgrade der Hydroxyaromatenverbindungen gewählt werden.

Beim Formgießen des Riemenkörpers oder der Cordeinbettungszone aus einem Riemenpolyurethan besitzt die Polyurethanmasse vor dem Aushärten eine Reaktivität, die ausreicht, um Bindungen mit dem Füllmaterial einzugehen, so dass zusätzlich zur mechanischen Einbindung des Cords in das Material des Riemenkörpers oder der Einbettungszone eine chemische Anbindung vorhanden ist. Die Anbindung geschieht jedoch lediglich an den Grenzflächen, soweit das Riemenpolyurethan in den Cord eindringt, so dass Füllmaterial, das sich im Kernbereich des Cords bzw. in nicht durch Riemenpolyurethan ausgefüllten Zwischenräumen befindet, seine elastizitätssteigernde Wirkung weiterhin vollständig ausüben kann.

In Weiterbildung der Erfindung ist der Cord so eingebettet, dass sich das Elastomer des Riemengrundkörpers oder der Cordeinbettungszone in im Randbereich des Cords liegenden Zwischenräumen zwischen Strängen des Cords befindet. Diese Einbettung betrifft wenigstens die Außenrillen des Cords. Diese sind gemäß einer bevorzugten Ausführungsform mit dem Riemenelastomer ausgefüllt.

Alternativ können die Zwischenräume des Cords vollständig mit dem besonderen Füllmaterial nach der Erfindung ausgefüllt sein oder von diesem sogar umschlossen sein, so dass der Cord insgesamt ummantelt ist.

Gemäß einer anderen bevorzugten Ausführungsform sind ein oder mehrere Stränge und/oder der Cord insgesamt mit dem vom Elastomer des Riemenkörpers oder der Einbettungszone abweichenden Material (Füllmaterial) beschichtet.

Gemäß besonders bevorzugter Ausführungsformen sind nur Einzelstränge im Kern des Cords mit dem Füllmaterial beschichtet.

Gemäß einem weiteren Aspekt der Erfindung füllt das die Zwischenräume des Cords füllende besondere Material wenigstens 20 % des Volumens der Zwischenräume aus.

Gemäß einem weiteren Aspekt der Erfindung enthält der Cord weniger als 0,29 mg, vorzugsweise weniger als 0,20 mg, weiter vorzugsweise weniger als 0,18 mg des Riemenelastomers pro mm³ Cordvolumen. Besonders bevorzugt ist dabei weiter, dass wenigstens 60 %, vorzugsweise wenigstens 80 % des nicht durch das Riemenelastomer besetzte Zwischenraumvolumens durch das eingeschlossene Füllmaterial ausgefüllt bzw. besetzt wird. Diese Maßnahmen bewirken eine besonders gute Einbindung jedes Cordmaterials in ein den Cord umgebendes Riemenelastomer, selbst wenn es sich dabei um ein relativ steifes Riemenelastomer oder insbesondere Polyurethan mit verhältnismäßig hohem Reibungskoeffizienten handelt.

Erfindungsgemäß enthalten die Zugträger Carbonfasern oder bestehen vollständig aus diesen. Ebenfalls bevorzugt sind Zugträger aus Carbonfasern im Gemisch mit Synthetikfasern, wie Aramidfasern, Polyamidfasern, Polyesterfasern usw.

Das "Mischen" verschiedener Fasermaterialien kann beispielsweise durch gemeinsames Verdrillen zu Strängen geschehen.

Der Kraftübertragungs- oder Förderriemen kann vorzugsweise ein Zahnriemen sein. Die Erfindung ist jedoch auch für Keilriemen, Keilrippenriemen oder Flachriemen hervorragend geeignet.

Das synthetische Elastomer des Riemengrundkörpers oder der Cordeinbettungszone ist ein Polyurethan. Das Riemenpolyurethan kann jedes für Kraftübertragungs- oder Förderriemen geeignete Polyurethan sein, wie dem Fachmann bekannt. Es braucht daher hier nicht näher beschrieben zu werden.

Vorzugsweise kann der Riemen wenigstens einseitig und insbesondere auf der Kraftübertragungsseite mit einer textilen Abdeckung versehen sein.

Die Lösung der Aufgabe umfasst weiterhin einen Zugträger nach Anspruch 12.

Der Zugträger kann vorzugsweise zu 10 bis 90 % mit dem Material gefüllt sein, d.h. das 10 bis 90 % des Zwischenraumvolumens mit dem Material ausgefüllt ist.

Weiterhin kann der Zugträger zusätzlich mit dem Füllmaterial ummantelt sein. Das Füllmaterial kann allgemein dadurch in den Zugträger eingebracht sein, dass sämtliche oder einzelne Stränge des Cords mit dem Füllmaterial beschichtet sind. Wie oben beschrieben, besteht der Zugträger vorzugsweise aus Carbonfasern oder enthält diese im Gemisch mit anderen Fasern.

Im Übrigen kann der isolierte Zugträger alle weiteren Merkmale zeigen, die bereits im Zusammenhang mit dem eingebetteten Zugträger für den erfindungsgemäßen Riemen beschrieben wurden.

Im Folgenden wird die Erfindung anhand von Ausführungsbeispielen beschrieben, die allein zu illustrativen Zwecken dienen und den Umfang der Erfindung, wie oben beschrieben, nicht einschränken.

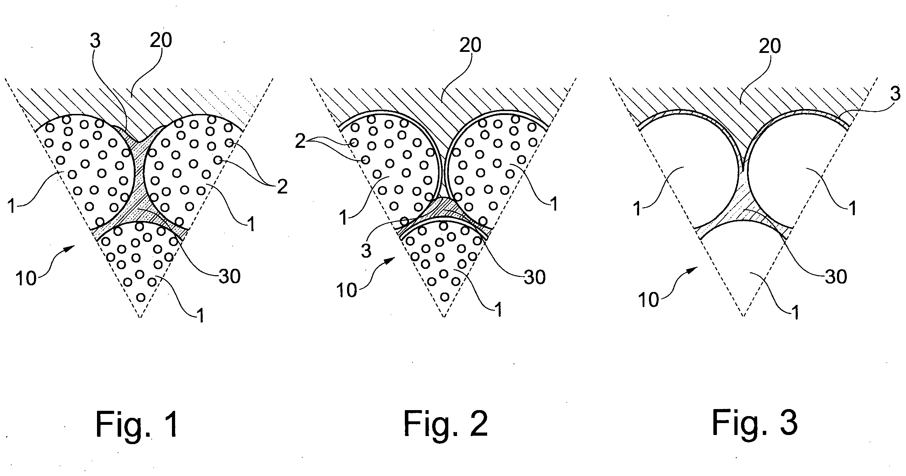

Figuren 1 bis 3 zeigen Sektoren verschiedener Cordquerschnitte zu jeweils in Polyurethan eingeschlossenem und gefülltem Cord.

Figur 1 zeigt in einer Querschnittsdarstellung, in der nur ein Segment eines Cords 10 gezeigt ist, nämlich ein erstes Ausführungsbeispiel für einen in Polyurethan eingebetteten Cord 10 mit den Strängen 1 und darin angedeuteten Carbonfasern 2. Der Cord ist in ein Polyurethanmaterial 20 eingebettet, das sich bis in die äußeren Rillen des Cords 10 zwischen den Strängen 1 erstreckt. Es grenzt an das vom Riemenpolyurethan abweichende, im Cord 10 eingeschlossene Material 30 an, das sich in einem in der Querschnittsdarstellung als Zwickel zu erkennenden Zwischenraum zwischen den drei Cordsträngen 1 befindet. Gemäß dieser Ausführungsform sind die Carbonfasern 2 durch das Füllmaterial 30 optimal geschützt. Dennoch ist durch die relativ große Grenzfläche 3 zwischen Polyurethan 20 und Füllmaterial 30 eine gute Materialanbindung gegeben.

Figur 2 zeigt ein weiteres Ausführungsbeispiel. Das Füllmaterial 30 befindet sich in diesem Beispiel als Beschichtung auf einem der inneren Stränge 1, so dass das Polyurethan 20 im Randbereich des Cords tiefer in die Zwischenräume zwischen den äußeren Strängen 1 des Cordmaterials eindringen kann. Es ergibt sich bei diesem Ausführungsbeispiel eine optimale mechanische Verzahnung des Polyurethans 20 des Riemengrundkörpers, welches den Cord 10 einbettet, mit den Cordsträngen 1. Dennoch wird die Elastizität des Cords 10 durch das Füllmaterial 30 gewährleistet, und es gibt eine Anbindung zwischen Füllmaterial 30 und Polyurethan 20 an der gemeinsamen Grenzfläche 3.

Figur 3 zeigt ein drittes Ausführungsbeispiel, bei welchem sämtliche gezeigten Stränge 1 des Cords 10 mit dem Füllmaterial 30 beschichtet sind. Auf diese Weise ist der Cord 10 zugleich mit dem Füllmaterial 30 ummantelt, und es ergibt sich eine sehr große Oberfläche 3 zum Polyurethan 20, d.h. eine vergrößerte Anbindungs- bzw. Klebefläche zwischen Füllmaterial 30 und Polyurethan 20.

Viele weitere Ausführungsbeispiele sind denkbar. Zum Beispiel kann der Cord dünner mit Füllmaterial beschichtet sein, so dass zusätzlich leere innere Zwischenräume zwischen den Cordsträngen bestehen bleiben.

Zur Herstellung des Cords können einzelne Stränge, Fasern, Litzen und/oder der gesamte Cordstrang mit dem speziellen Füllmaterial nach der Erfindung beschichtet werden, was beispielsweise durch Tauchen in einer Lösung aus dem Füllmaterial geschehen kann, und alternativ kann eine solche Beschichtung durch Sprühen auf die einzelnen Stränge und/oder das gesamte Cordmaterial aufgebracht werden. Eine alternative Herstellungsweise besteht darin, das Füllmaterial während des Drehens, Schlagens oder Flechtens des Cordstrangs vor dem endgültigen Zusammenführen der Stränge als weiches bis elastisch-formstabiles Material, beispielsweise in Form von Fäden oder Gussmasse einzubringen.

## Patentansprüche

1. Kraftübertragungs- oder Förderriemen mit einem Riemengrundkörper oder einer Cordeinbettungszone aus einem synthetischen Elastomer (20) und wenigstens einem in das synthetische Elastomer eingebetteten Zugträger aus einem Cord (10), zwischen dessen Strängen (1) sich ein Material befindet, das vom Elastomer (20) des Riemenkörpers abweicht, wobei
- das Elastomer (20) des Riemenkörpers ein Polyurethan ist und
- der oder die Zugträger Carbonfasern enthalten oder aus diesen bestehen, **dadurch gekennzeichnet,**
- **dass** das zwischen den Strängen (1) des Zugträger-Cords (10) vorhandene Material (30)
a) aus einem nachhärtbaren, nicht kautschukhaltigen Hydroxyaromat-Aldehyd-Harz besteht, wobei der Hydroxyaromat ausgewählt ist aus der Gruppe bestehend aus Resorcin, Phenol, Hydrochinon, Kresol, Bisphenol A, oder
b) aus Reaktionsprodukten aus Hydroxyaromaten oder Hydroxyaromat-Aldehyd-Verbindungen mit Isocyanaten oder Isocyanat-Prepolymeren besteht.

2. Kraftübertragungs- oder Förderriemen nach Anspruch 1, **dadurch gekennzeichnet, dass** die Harze nach a) ausgewählt sind aus Resorcin-Formaldehyd-Harzen, Phenolformaldehyd-Harzen und Phenol-Resorcin-Formaldehyd-Harzen.

3. Kraftübertragungs- oder Förderriemen nach Anspruch 1, **dadurch gekennzeichnet, dass** das Reaktionsprodukt nach b) ein solches von Resorcin, Resorcin-Formaldehydverbindungen, Phenol-Formaldehyd-Verbindungen und Resorcin-Phenol-Formaldehydverbindungen mit Isocyanaten oder Isocyanat-Prepolymeren ist.

4. Kraftübertragungs- oder Förderriemen nach einem der Ansprüche 1 bis 3, **dadurch gekennzeichnet, dass** der Cord (10) so eingebettet ist, dass sich in den im Randbereich des Cords (10) liegenden Zwischenräumen zwischen Strängen (1) des Cords (10) Elastomer (20) des Riemengrundkörpers befindet.

5. Kraftübertragungs- oder Förderriemen nach einem der Ansprüche 1 bis 4, **dadurch gekennzeichnet, dass** ein oder mehrere Stränge (1) und/oder der Cord (10) insgesamt mit dem vom Elastomer des Riemenkörpers oder der Cordeinbettungszone abweichenden Material (30) beschichtet sind.

6. Kraftübertragungs- oder Förderriemen nach einem der Ansprüche 1 bis 5, **dadurch gekennzeichnet, dass** nur Stränge (1) im Kern des Cords (10) mit dem vom Elastomer (20) des Riemenkörpers oder der Zone abweichenden Material (30) beschichtet sind.

7. Kraftübertragungs- oder Förderriemen nach einem der Ansprüche 1 bis 6 **dadurch gekennzeichnet, dass** das die Zwischenräume des Cords (10) füllende Material (30) wenigstens 20 % des Volumens der Zwischenräume ausfüllt.

8. Kraftübertragungs- oder Förderriemen nach einem der Ansprüche 1 bis 7, **dadurch gekennzeichnet, dass** der Cord (10) weniger als 0,20 mg des Elastomers des Riemenkörpers oder der Einbettungszone pro mm³ Cordvolumen enthält.

9. Kraftübertragungs- oder Förderriemen nach einem der Ansprüche 1 bis 8, **dadurch gekennzeichnet, dass** der wenigstens eine Zugträger aus Carbonfasern im Gemisch mit Synthetikfasern, insbesondere Aramidfasern, Polyamidfasern oder Polyesterfasern, besteht.

10. Kraftübertragungs- oder Förderriemen nach einem der Ansprüche 1 bis 9, **dadurch gekennzeichnet, dass** der Riemen ein Zahnriemen, Keilriemen oder Keilrippenriemen ist.

11. Kraftübertragungs- oder Förderriemen nach einem der Ansprüche 1 bis 10, **dadurch gekennzeichnet, dass** der Riemen wenigstens einseitig mit einer textilen Abdeckung versehen ist.

12. Zugträger für einen Kraftübertragungs- oder Förderriemen nach einem der Ansprüche 1 bis 11 aus einem Cord (10), dessen Stränge (1) Carbonfasern enthalten oder daraus bestehen und der **dadurch gekennzeichnet ist, dass** sich zwischen dessen Strängen (1) ein Material (30) befindet, welches
a) aus einem nachhärtbaren, nicht kautschukhaltigen Hydroxyaromat-Aldehyd-Harz besteht, wobei der Hydroxyaromat ausgewählt ist aus der Gruppe bestehend aus Resorcin, Phenol, Hydrochinon, Kresol, Bisphenol A, oder
b) aus Reaktionsprodukten aus Hydroxyaromaten oder Hydroxyaromat-Aldehyd-Verbindungen mit Isocyanaten oder Isocyanat-Prepolymeren besteht,
wobei die Zugträger für die Einbettung in ein synthetisches Elastomer (20) des Riemengrundkörpers vorgesehen sind.

## Claims

1. Power-transmission belt or transport belt with a belt body or a cord-embedment zone made of a synthetic elastomer (20) and with, embedded into the synthetic elastomer, at least one tension-member system made of a cord (10), between strands (1) of which there is a material present which differs from the elastomer (20) of the belt structure, where
- the elastomer (20) of the belt body is a polyurethane and
- the tension-member system(s) comprise(s), or consist(s) of, carbon fibres,
**characterized in that**
- the material (30) present between the strands (1) of the tension-member-system cord (10)
a) consists of a post-curable, non-rubber-containing hydroxyaromatic-aldehyde resin, where the hydroxyaromatic is selected from the group consisting of resorcinol, phenol, hydroquinone, cresol, bisphenol A, or
b) consists of reaction products of hydroxyaromatics or hydroxyaromatic-aldehyde compounds with isocyanates or isocyanate prepolymers.

2. Power-transmission belt or transport belt according to Claim 1, **characterized in that** the resins according to a) are selected from resorcinol-formaldehyde resins, phenol-formaldehyde resins and phenol-resorcinol-formaldehyde resins.

3. Power-transmission belt or transport belt according to Claim 1, **characterized in that** the reaction product according to b) is a reaction product of resorcinol, resorcinol-formaldehyde compounds, phenol-formaldehyde compounds or resorcinol-phenol-formaldehyde compounds with isocyanates or isocyanate prepolymers.

4. Power-transmission belt or transport belt according to any of Claims 1 to 3, **characterized in that** the manner of embedment of the cord (10) is such that elastomer (20) of the belt base is present in the interstices between strands (1) of the cord (10) in the peripheral region of the cord (10).

5. Power-transmission belt or transport belt according to any of Claims 1 to 4, **characterized in that** the material (30) differing from the elastomer of the belt body or of the cord-embedment zone coats one or more strands (1) and/or the entire cord (10).

6. Power-transmission belt or transport belt according to any of Claims 1 to 5, **characterized in that** the material (30) differing from the elastomer (20) of the belt body or of the zone coats only strands (1) in the core of the cord (10).

7. Power-transmission belt or transport belt according to any of Claims 1 to 6, **characterized in that** the material (30) occupying the interstices of the cord (10) fills at least 20% of the volume of the interstices.

8. Power-transmission belt or transport belt according to any of Claims 1 to 7, **characterized in that** the cord (10) comprises less than 0.20 mg of the elastomer of the belt body or of the embedment zone per mm³ of cord volume.

9. Power-transmission belt or transport belt according to any of Claims 1 to 8, **characterized in that** the at least one tension-member system consists of carbon fibres in a mixture with synthetic fibres, in particular aramid fibres, polyamide fibres of polyester fibres.

10. Power-transmission belt or transport belt according to any of Claims 1 to 9, **characterized in that** the belt is a toothed belt, V-belt, or V-ribbed belt.

11. Power-transmission belt or transport belt according to any of Claims 1 to 10, **characterized in that** the belt has a protective textile covering at least on one side.

12. Tension-member system for a power-transmission belt or transport belt according to any of Claims 1 to 11 made of a cord (10), the strands (1) of which comprise, or consist of, carbon fibres and which is **characterized in that** between the said strands (1) there is a material (30) present which,
a) consists of a post-curable, non-rubber-containing hydroxyaromatic-aldehyde resin, where the hydroxyaromatic is selected from the group consisting of resorcinol, phenol, hydroquinone, cresol, bisphenol A, or
b) consists of reaction products of hydroxyaromatics or hydroxyaromatic-aldehyde compounds with isocyanates or with isocyanate prepolymers, where the tension-member systems are provided for embedment into a synthetic elastomer (20) of the belt body.

## Revendications

1. Courroie de transmission de force ou de transport, comprenant un corps de base de courroie ou une zone d'incorporation de corde en un élastomère synthétique (20) et au moins un support de traction incorporé dans l'élastomère synthétique en une corde (10), entre les filaments (1) de laquelle se trouve un matériau qui diffère de l'élastomère (20) du corps de la courroie,
- l'élastomère (20) du corps de la courroie étant un polyuréthane, et
- le ou les supports de traction contenant des fibres de carbone ou étant constituées de celles-ci, **caractérisée en ce que**
- le matériau (30) présent entre les filaments (1) de la corde du support de traction (10) est constitué par
a) une résine de composé hydroxyaromatique-aldéhyde non caoutchoutique post-durcissable, le composé hydroxyaromatique étant choisi dans le groupe constitué par la résorcine, le phénol, l'hydroquinone, le crésol, le bisphénol A, ou
b) des produits de réaction de composés hydroxyaromatiques ou de composés hydroxyaromatiques-aldéhydes avec des isocyanates ou des prépolymères d'isocyanate.

2. Courroie de transmission de force ou de transport selon la revendication 1, **caractérisée en ce que** les résines selon a) sont choisies parmi les résines de résorcine-formaldéhyde, les résines de phénol-formaldéhyde et les résines de phénol-résorcine-formaldéhyde.

3. Courroie de transmission de force ou de transport selon la revendication 1, **caractérisée en ce que** le produit de réaction selon b) est un produit de réaction de résorcine, de composés de résorcine-formaldéhyde, de composés de phénol-formaldéhyde et de composés de résorcine-phénol-formaldéhyde avec des isocyanates ou des prépolymères d'isocyanate.

4. Courroie de transmission de force ou de transport selon l'une quelconque des revendications 1 à 3, **caractérisée en ce que** la corde (10) est incorporée de sorte que l'élastomère (20) du corps de base de la courroie se trouve dans les espaces intermédiaires entre les filaments (1) de la corde (10) situés dans la zone de bord de la corde (10).

5. Courroie de transmission de force ou de transport selon l'une quelconque des revendications 1 à 4, **caractérisée en ce qu'**un ou plusieurs filaments (1) et/ou l'ensemble de la corde (10) sont revêtus avec le matériau (30) différant de l'élastomère du corps de la courroie ou de la zone d'incorporation de corde.

6. Courroie de transmission de force ou de transport selon l'une quelconque des revendications 1 à 5, **caractérisée en ce que** seuls des filaments (1) dans le noyau de la corde (10) sont revêtus avec le matériau (30) différant de l'élastomère (20) du corps de la courroie ou de la zone.

7. Courroie de transmission de force ou de transport selon l'une quelconque des revendications 1 à 6, **caractérisée en ce que** le matériau (30) remplissant les espaces intermédiaires de la corde (10) remplit au moins 20 % du volume des espaces intermédiaires.

8. Courroie de transmission de force ou de transport selon l'une quelconque des revendications 1 à 7, **caractérisée en ce que** la corde (10) contient moins de 0,20 mg de l'élastomère du corps de la courroie ou de la zone d'incorporation par mm³ de volume de corde.

9. Courroie de transmission de force ou de transport selon l'une quelconque des revendications 1 à 8, **caractérisée en ce que** ledit au moins un support de traction est constitué de fibres de carbone en mélange avec des fibres synthétiques, notamment des fibres d'aramide, des fibres de polyamide ou des fibres de polyester.

10. Courroie de transmission de force ou de transport selon l'une quelconque des revendications 1 à 9, **caractérisée en ce que** la courroie est une courroie dentée, une courroie trapézoïdale ou une courroie trapézoïdale nervurée.

11. Courroie de transmission de force ou de transport selon l'une quelconque des revendications 1 à 10, **caractérisée en ce que** la courroie est munie sur au moins un côté d'un recouvrement textile.

12. Support de traction pour une courroie de transmission de force ou de transport selon l'une quelconque des revendications 1 à 11, en une corde (10), dont les filaments (1) contiennent des fibres de carbone ou en sont constitués, et qui est **caractérisé en ce qu'**un matériau (30) se trouve entre ses filaments (1), qui est constitué par
a) une résine de composé hydroxyaromatique-aldéhyde non caoutchoutique post-durcissable, le composé hydroxyaromatique étant choisi dans le groupe constitué par la résorcine, le phénol, l'hydroquinone, le crésol, le bisphénol A, ou
b) des produits de réaction de composés hydroxyaromatiques ou de composés hydroxyaromatiques-aldéhydes avec des isocyanates ou des prépolymères d'isocyanate,
les supports de traction étant prévus pour l'incorporation dans un élastomère synthétique (20) du corps de base de la courroie.
